# EUROPEAN PATENT SPECIFICATION

(11) **EP 2 778 458 B1**
(45) Date of publication and mention of the grant of the patent: **30.01.2019**
(21) Application number: 14000555.4
(22) Date of filing: 17.02.2014
(51) Int. Cl.: F16D 13/75

(54) **Vehicle clutch including wear adjuster**
Fahrzeugkupplung mit Verschleissnachstelleinrichtung
Embrayage de véhicule avec dispositif de rattrapage d'usure

(30) Priority: 11.03.2013 GB 201304362
(43) Date of publication of application: 17.09.2014
(73) Proprietor: AP Automotive Products Srl, 60030 Moie di Maiolati (IT)
(72) Inventor: Mazzarini, Nicola, 60035 Jesi (IT); Caracini, Pietro, 60030 Moie di Maiolati (IT)
(74) Representative: Morrall, Roger

(56) References cited:
- US-A- 5 513 736
- US-A- 5 690 203
- US-A- 5 911 293

## Description

This invention relates to vehicle clutches and in particular to such clutches which include a wear adjuster and which transmit drive from a vehicle engine to an associated vehicle transmission. Such clutches are e.g. known from US 5 513 736 A.

There have been many attempts to provide a vehicle clutch which has a wear adjuster but most of these prior designs have been complex in construction and have also suffered from poor long term reliability rendering themselves in effective as adjusters well before the clutch is worn out.

It is an object of the present invention to provide an improved form of vehicle clutch which is simple in construction and reliable in operation.

Thus according to the present invention there is provided a friction clutch for a motor vehicle, the clutch comprising a pressure plate biased towards an associated flywheel by a diaphragm spring, a clutch drive disc for clamping between the pressure plate and the associated flywheel, and a ramp type wear adjuster located in the thrust path between the diaphragm spring and the pressure plate to compensate for wear of the drive disc, the wear adjuster comprising a first ramp means nearest to the pressure plate and a second ramp means in contact with the first ramp means but further away from the pressure plate and also in contact with the diaphragm spring, the first and second ramp means being relatively rotatable about the axis of rotation of the pressure plate by an adjuster spring means to increase the combined effective thickness of the ramp means and hence maintain the travel of the diaphragm spring substantially constant as the clutch disc wears, the wear adjuster also including a wear sensor in the form of pin means carried in bore means in the pressure plate and held relative to the pressure plate by a friction grip, one end of the pin means engaging the flywheel when the clutch is engaged and the other end of the pin means having a first abutment which contacts a hold down member connected with the second ramp means, and lift spring means supported on a second abutment on the pin means and tending to bias the hold down member and thus the second ramp means away from the the first ramp means and towards the first abutment, thus as the clutch disc wears the pin means is pushed through the bore means to load the lift spring means so that, after sufficient wear has occurred, when the clutch is released, the loading of the lift spring means due to clutch disc wear biases the ramp means apart to allow a gap to occur between the first and second ramp means which is dependent on clutch disc wear, so that the adjuster spring means can rotate the two ramp means relative to each other and thus increase the combined effective thickness of the ramp means to maintain the position and inclination (angle) of the diaphragm spring substantially constant as the clutch disc wears.

Conveniently the lift spring means may surround the pin means.

The lift spring means may comprise Belleville springs in series or parallel or coil springs.

The pin means may be provided as a rolled pin which is squashed in its bore means to provide the friction grip with the pressure plate.

Alternatively the friction grip may be provided by tapering cone shells which surround the pin means and are biased into contact with a conical potion of the bore means by the lift spring means.

In a further alternative the friction grip may be provided by a self-griping washer whose inner periphery grips the pin means.

Both abutment means are provided by circlips carried by the pin.

In an alternative construction one abutment may be provided by a circlip carried by the pin and the other abutment may be provided by a shoulder formed on the pin. The abutment at the other end of the pin may be provided by a head portion formed on the pin and the second abutment may be provided by a shoulder formed on the pin.

The other end of the pin may have axially adjacent head, seating and neck portions, the pin being connected with the hold down member via a slot in the hold down member which opens into a seating hole, the slot allowing the neck portion of the pin to pass therethrough into the seating hole when the lift spring means is compressed during assembly of the clutch so that the seating portion of the pin can sit in the seating hole when the lift spring means is released to hold the pin in the hole.

To provide a balanced set up a plurality of wear sensors may be provided at circumferentially spaced locations on the pressure plate.

The present invention will now be described, by way of example only with reference to the accompanying drawings in which:-
Figure 1 shows a radial section through part of a first embodiment of the present invention in an unworn clutch engaged position;
Figure 2 shows a sectional view on line A-A of Figure 1;
Figure 3 shows the embodiment of Figure 1 with the clutch disengaged and about to make a wear adjustment;
Figure 4 shows the embodiment of Figure 1 with the clutch engaged after a wear adjustment has occurred;
Figure 5 shows a radial section through part of a second embodiment of the present invention in an unworn clutch engaged position;
Figure 6 shows a sectional view on line B-B of Figure 5;
Figure 7 shows the embodiment of Figure 5 with the clutch disengaged and about to make a wear adjustment;
Figure 8 shows the embodiment of Figure 5 with the clutch engaged after a wear adjustment has occurred;
Figure 9 shows a radial section through part of a third embodiment of the present invention in an unworn clutch engaged position;
Figure 10 shows a sectional view on line C-C of Figure 9;
Figure 11 shows the embodiment of Figure 9 with the clutch disengaged and about to make a wear adjustment;
Figure 12 shows the embodiment of Figure 9 with the clutch engaged after a wear adjustment has occurred;
Figures 13 and 14 show plan and edge views respectively of part of the adjuster ramp arrangement used in the adjuster of the present invention;
Figure 15 shows a radial section through part of a fourth embodiment of the present invention in an unworn clutch engaged position;
Figure 16 shows a sectional view on line D-D of Figure 15;
Figure 17 shows the embodiment of Figure 15 with the clutch disengaged and about to make a wear adjustment;
Figure 18 shows a radial section through an alternative attachment for the sensor pin used in Figures 15 to 17;
Figure 19 shows the shape of the alternative sensor pin used in Figure 18;
Figure 20 to 22 show stages in the mounting of the alternative sensor pin, and
Figures 23 and 24 show the operation of the alternative sensor pin.

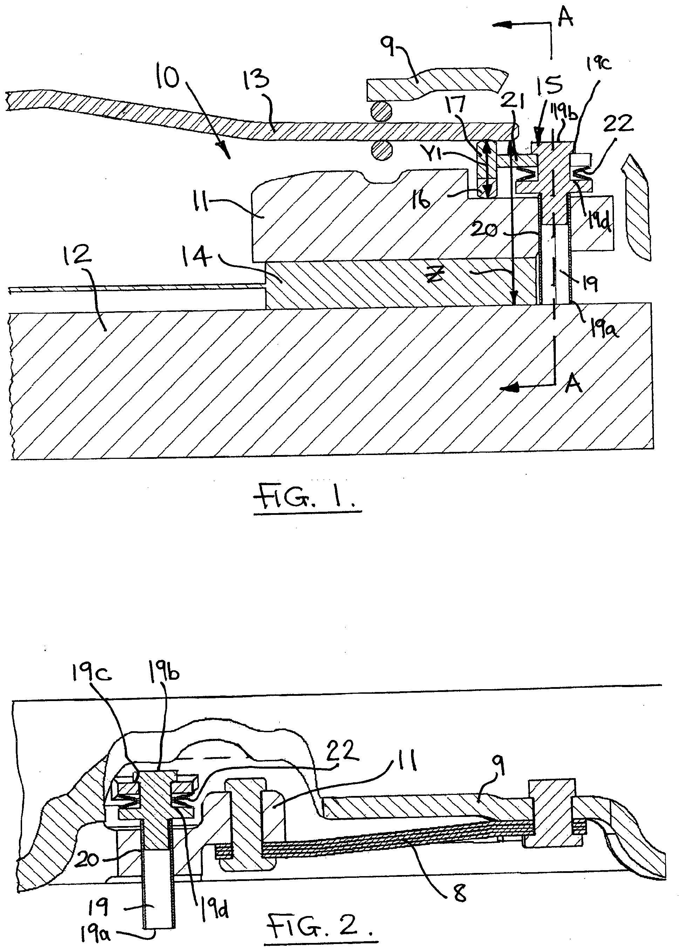

Referring to the drawings, a vehicle friction clutch 10 in accordance with the present invention has a pressure plate 11 biased towards an associated flywheel 12 by a diaphragm spring 13 supported from a clutch cover 9. A clutch drive disc 14 is provided for clamping between the pressure plate 11 and the flywheel 12 and a ramp type wear adjuster 15 is located in the thrust path between the diaphragm spring 13 and the pressure plate 11 to compensate for wear of the drive disc 14. Lift straps 8 (see Figure 2) are provided at circumferentially spaced locations between the cover 9 and the pressure plate 11 to ensure that the pressure plate 11 lift away from the flywheel when the clutch is disengaged.

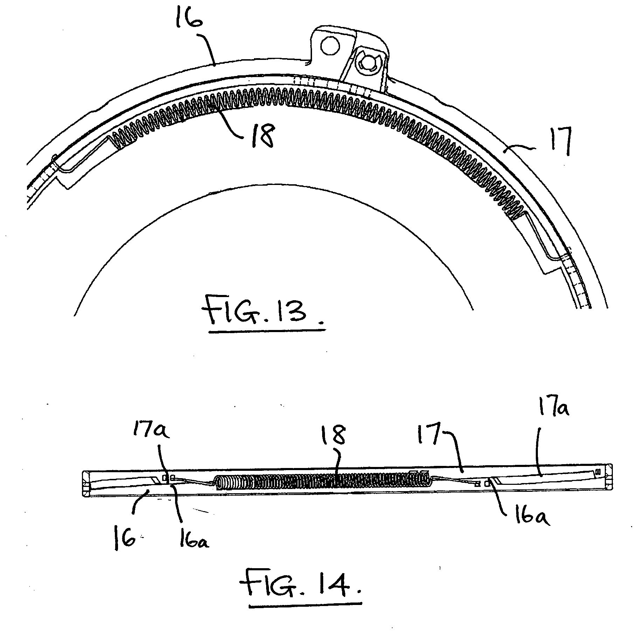

The wear adjuster 15 comprises a first ramp means in the form of a ring 16 nearest to the pressure plate 11 and a second ramp means in the form of a second ring 17 which is in contact with the first ring 16 but further away from the pressure plate and is also in contact with the diaphragm spring13. As can best be seen from Figures 13 and 14, the first and second rings 16 and 17 are relatively rotatable about the axis of rotation of the pressure plate by adjuster spring means in the form of coils springs 18 and the rings 16 and 17 have contacting ramp surfaces 16a and 17a respectively which cooperate when the rings are rotated relative to each other by springs 18 to increase the combined effective thickness (see Y1 in Figure 1) of the rings to adjust the clutch for wear of the disc 14 as will be explained below.

The wear adjuster also includes a wear sensor in the form of a hollow rolled sensor pin 19 which is squashed as a friction grip in a bore 20 in the pressure plate 11. One end 19a of the pin 19 engages the flywheel 12 when the clutch is engaged (see Figure 1) and the pin is pushed through the bore 20 against the friction grip as the friction disc wears14. The other end 19b of pin 19 means has a first abutment 19c which contacts a hold down member 21 connected with the second ramp ring 17 and a second abutment 19d which supports lift springs in the form of Belleville springs 22 which surround pin 19 and which tend to bias the hold down member 21 and thus the second ramp ring 17 away from the first ramp ring 16 and towards the first abutment 19c. In a typical construction there will be three sensor pins 19 positioned at 120 degree intervals around the pressure plate 11 to provide a balance arrangement.

When the clutch is engaged by the diaphragm spring 13 there is a solid metal thrust path from diaphragm spring 13 via ramp rings 16 and 17 to pressure plate 11. Hence the effects of lift springs 22 are short circuited and have no influence on clutch engagement.

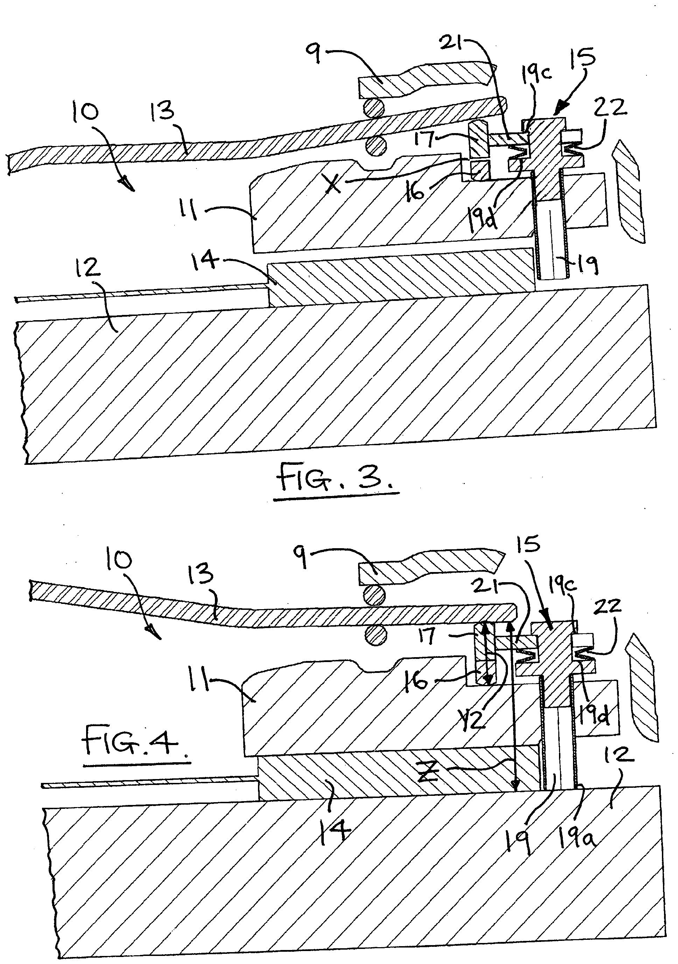

As the clutch disc 14 wears, the pins 19 are pushed through the bores 20 to load the lift springs 22 so that, after sufficient wear has occurred, when the clutch is released, the loading of the lift spring means due to clutch disc wear, overcomes the effect of lift straps 8 (which tend to bias the ramp rings 16 and 17 towards each other) and biases the ramp rings 16 and 17 apart to allow a gap X to occur between the ramp rings (see Figure 3). This gap is dependent on clutch disc wear and allows the adjuster springs 18 to rotate the two ramp rings relative to each other and thus increase the combined effective thickness of the ramp rings from Y1 in Figure 1 to Y2 in Figure 4. Figure 4 shows the adjusted clutch in the engaged condition immediately after a wear adjustment has been made when it can be seen that the distance Z of the diaphragm spring from the flywheel is the same as in Figure 1 so that the position and inclination (angle) of the diaphragm spring during operation of the clutch remains substantially constant as the clutch disc wears.

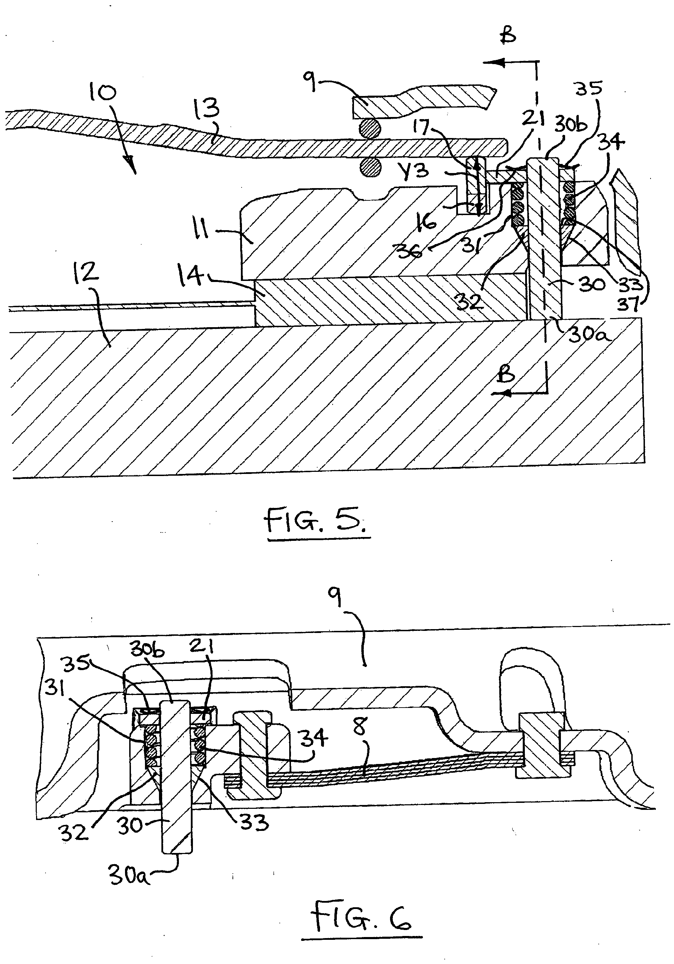

Figures 5 to 8 show a second embodiment of the invention in the same basic positions as shown in Figures 1 to 4. In this embodiment it is only the sensor pin construction which is different. Each sensor pin 30 is solid and the friction grip in tapering bore 31 is provided by tapering cone shells 32 which surround the pin 30 and are biased into contact with a conical portion 33 of the bore 31 by a coil lift spring 34 which also acts against hold down member 21. End 30b of pin 30 is provided with a gripping washer 35 which provides a first abutment 36 against which hold down member 21 is pressed by lift spring 34. The other end of spring 34 acts against a second abutment provided by the upper surface 37 of shells 32. Again there are three sensor pins 30 positioned at 120 degree intervals around the pressure plate 11.

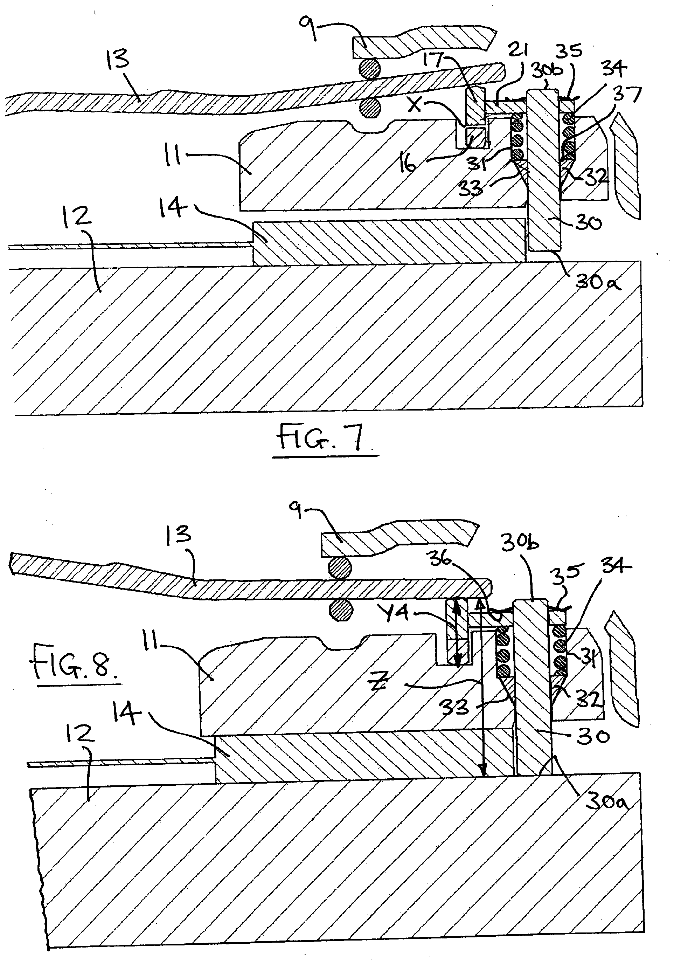

As the clutch disc 14 wears, the pins 30 are pushed through the bores 31 to load the lift springs 34 so that, after sufficient wear has occurred, when the clutch is released, the loading of the lift spring means due to clutch disc wear, overcomes the effect of lift straps 8 (which tend to bias the ramp rings 16 and 17 towards each other) and biases the ramp rings 16 and 17 apart to allow a gap X to occur between the ramp rings (see Figure 7). This gap is dependent on clutch disc wear and allows the adjuster springs 18 to rotate the two ramp rings relative to each other and thus increase the combined effective thickness of the ramp rings from Y3 in Figure 5 to Y4 in Figure 8 so that the position and inclination (angle) of the diaphragm spring during operation of the clutch remains substantially constant as the clutch disc wears as explained above in relation to Figures 1 to 4.

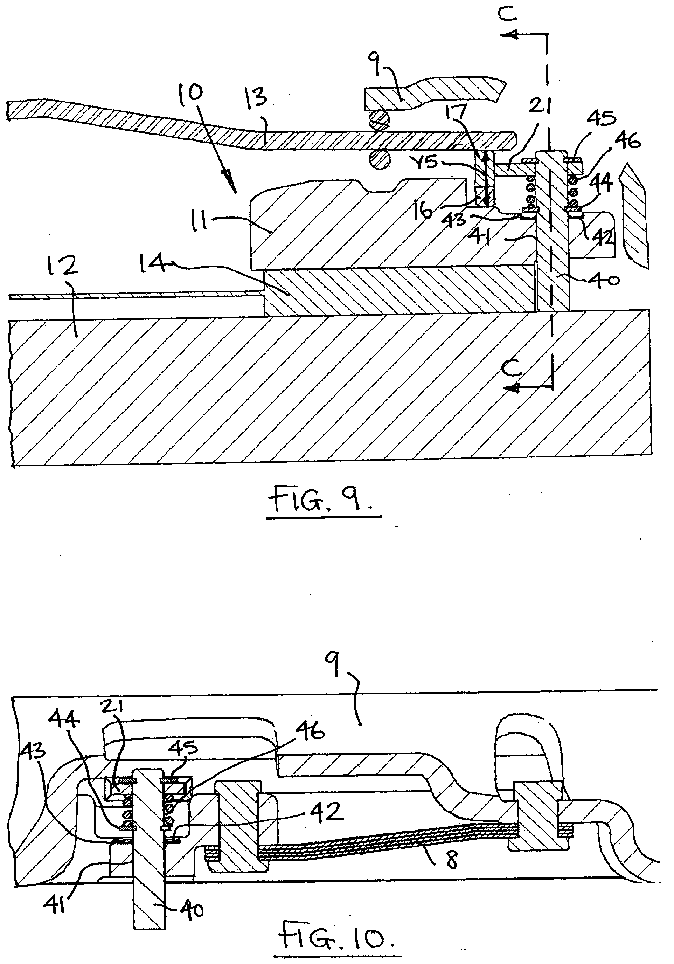

Figures 9 to12 show a third embodiment of the invention in the same basic positions as shown in Figures 1 to 4. Again in this embodiment it is only the sensor pin construction which is different. Each sensor pin 40 is solid and the friction grip in bore 41 is provided by a self-griping washer 42 whose inner periphery grips the pin 40 and whose outer periphery grips a shoulder 43 in the bore 41.

Pin 40 has a fist abutment provided by a first circlip 45 and a second abutment provided by a second circlip 44. A coil lift spring 46 acts between the circlips 44 and 45 to press hold down member 21 against circlip 45 .

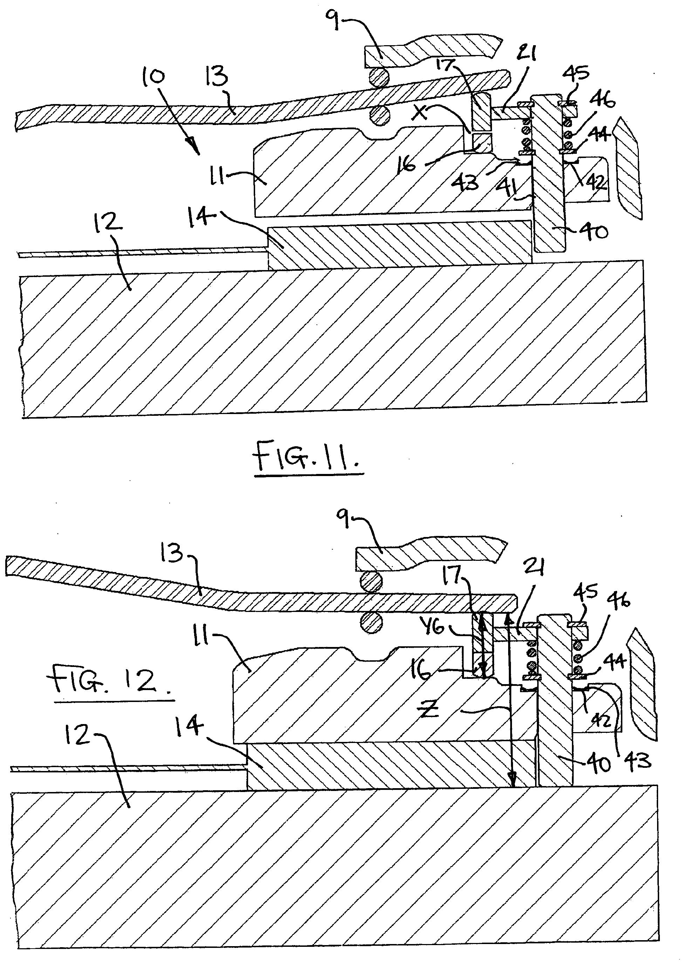

As the clutch disc 14 wears, the pins 40 are pushed through the bores 41 to load the lift springs 46 so that, after sufficient wear has occurred, when the clutch is released, the loading of the lift spring means due to clutch disc wear, overcomes the effect of lift straps 8 (which tend to bias the ramp rings 16 and 17 towards each other) and biases the ramp rings 16 and 17 apart to allow a gap X to occur between the ramp rings (see Figure 11). This gap is dependent on clutch disc wear and allows the adjuster springs 18 to rotate the two ramp rings relative to each other and thus increase the combined effective thickness of the ramp rings from Y5 in Figure 9 to Y6 in Figure 12 so that the position and inclination (angle) of the diaphragm spring during operation of the clutch remains substantially constant as the clutch disc wears as explained above in relation to Figures 1 to 4.

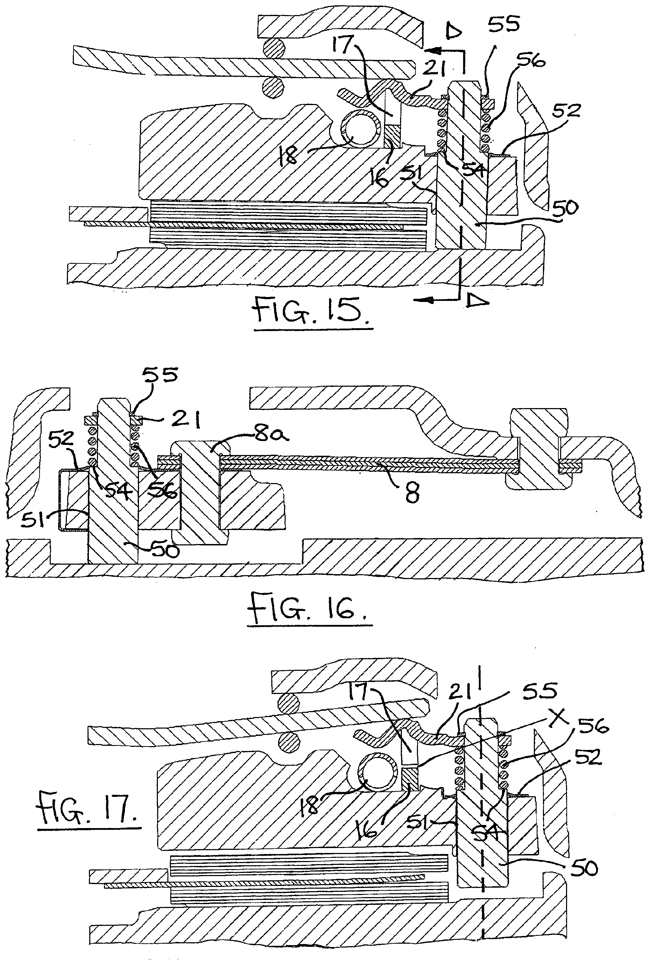

Figures 15 to 17 show a third embodiment of the invention. Again in this embodiment it is only the sensor pin construction which is different. Each sensor pin 50 is solid and the friction grip in bore 51 is provided by a self-griping washer 52 which is preassembled onto the pressure plate by the rivet 8a which rivets lift strap 8 to the pressure plate.

Pin 50 has a fist abutment provided by a circlip 55 and a second abutment provided by a shoulder 54. A coil lift spring 56 acts between the circlip 55 and the shoulder 54 to press sheet metal hold down member 21, which is formed integrally with upper sheet metal ramp ring 17, against circlip 55.

As the clutch disc 14 wears, the pins 50 are pushed through the bores 51 to load the lift springs 56 so that, after sufficient wear has occurred, when the clutch is released, the loading of the lift spring means due to clutch disc wear, overcomes the effect of lift straps 8 (which tend to bias the ramp rings 16 and 17 towards each other) and biases the ramp rings 16 and 17 apart to allow a gap X to occur between the ramp rings (see Figure 17). This gap is dependent on clutch disc wear and allows the adjuster springs 18 to rotate the two ramp rings relative to each other and thus increase the combined effective thickness of the ramp rings 16 and 17 so that the position and inclination (angle) of the diaphragm spring during operation of the clutch remains substantially constant as the clutch disc wears as explained above in relation to the previous embodiments.

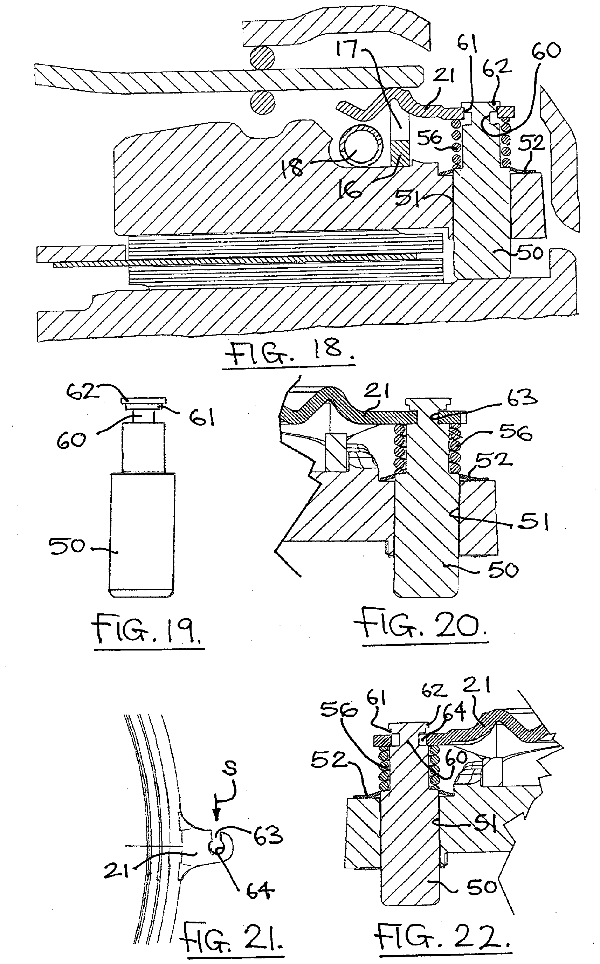

Figures 18 to 22 show an alternative form of attachment of the sensing pin 50 of Figures 15 to 17 which eliminates the circlip 55.

As can be seen from Figure 18, the sensing pin 50 has an upper end provided with a neck portion 60 a seating portion 61 and a head portion 62 best seen in Figure 19. The hold down member 21, which is an integral part of the ramp ring 17 (as in Figures 15 to 17), has a slot 63 (see Figure 21) which has a width through which the neck portion 60 of pin 50 can pass and which leads to a seating hole 64 in which the seating portion 61 of pin 50 can sit.

To mount the pin 50 in the hole 64 the spring 56 is compressed (see Figure 20) so that the neck portion 60 of the pin 50 aligns with the slot 63 and the neck potion is then slid through the slot 63 into the hole 64 as indicated by the arrow S in Figure 21 to the position shown in Figure 22. The spring 56 is then released so that the seating potion 61 of the pin 50 can enter and sit in the hole 64 and thus prevent the pin sliding out of the slot 63 as shown in Figure 18.

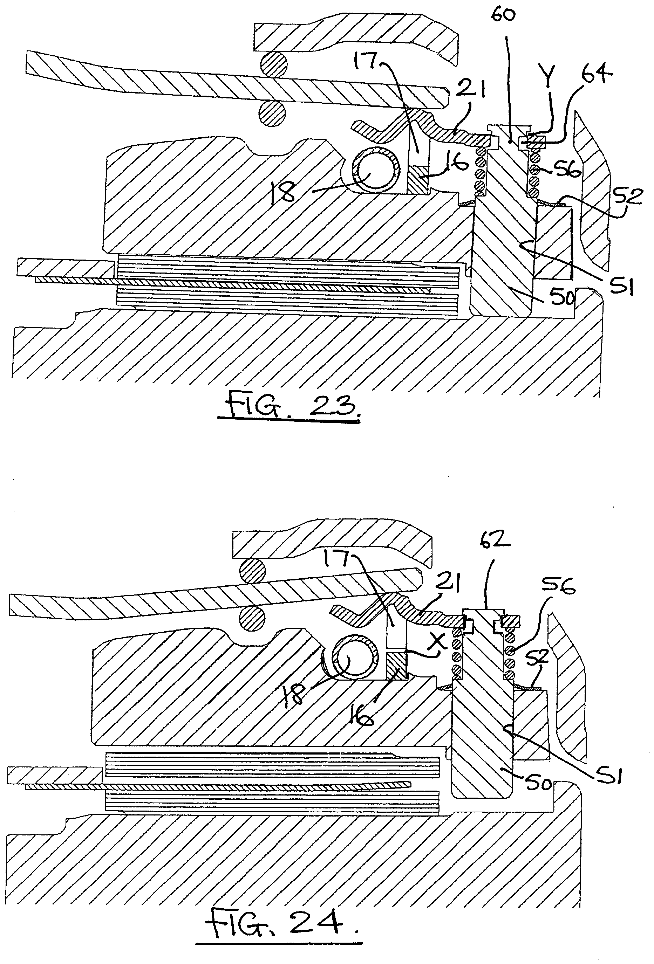

With the sensing pin arrangement shown in Figures 18 to 22 as the clutch disc 14 wears, the pins 50 are pushed through the bores 51 to load the lift springs 56 so that the head portion of the pins rise above the hold down members 21 to create a gap Y (see Figure 23) dependent on the wear of the clutch disc. After sufficient wear has occurred, when the clutch is released, the loading of the lift spring means due to clutch disc wear, overcomes the effect of lift straps 8 (which tend to bias the ramp rings 16 and 17 towards each other) and biases the ramp rings 16 and 17 apart to allow a gap X to occur (see Figure 24) between the ramp rings. This gap is again dependent on clutch disc wear and allows the adjuster springs 18 to rotate the two ramp rings relative to each other and thus increase the combined effective thickness of the ramp rings 16 and 17 so that the position and inclination (angle) of the diaphragm spring during operation of the clutch remains substantially constant as the clutch disc wears as explained above in relation to the previous embodiments.

As can be seen from the above the present invention provides a simple but effective wear adjuster mechanism for a vehicle clutch which is also reliable in operation.

## Claims

1. A friction clutch for a motor vehicle, the clutch comprising a pressure plate (11) biased towards an associated flywheel (12) by a diaphragm spring (13), a clutch drive disc (14) for clamping between the pressure plate (11) and the associated flywheel (12), and a ramp type wear adjuster (15) located in the thrust path between the diaphragm spring (13) and the pressure plate (11) to compensate for wear of the drive disc (14), the wear adjuster (15) comprising a first ramp means (16) nearest to the pressure plate (11) and a second ramp means (17) in contact with the first ramp means but further away from the pressure plate (11) and also in contact with the diaphragm spring (13), the first and second ramp means being relatively rotatable about the axis of rotation of the pressure plate (11) by an adjuster spring means (18) to increase the combined effective thickness of the ramp means and hence maintain the travel of the diaphragm spring (13) substantially constant as the clutch disc (14) wears, the wear adjuster (15) also including a wear sensor in the form of pin means(19, 30, 40, 50) carried in bore means (20, 31, 41, 51) in the pressure plate (11) and held relative to the pressure plate (11) by a friction grip, one end (19A, 30A) of the pin means (19, 30, 40, 50) engaging the flywheel (12) when the clutch is engaged and the other end (19B, 30B) of the pin means (19, 30, 40, 50) having a first abutment (19C, 36) which contacts a hold down member (21) connected with the second ramp means, the friction clutch **characterised by** lift spring means (22, 34, 46, 56) supported on a second abutment (19D, 37) on the pin means (19, 30, 40, 50) and tending to bias the hold down member (21) and thus the second ramp means away from the first ramp means and towards the first abutment (19C, 36), thus as the clutch disc (14) wears the pin means (19, 30, 40, 50) is pushed through the bore means (20, 31, 41, 51) to load the lift spring means (22, 34, 46, 56) so that, after sufficient wear has occurred, when the clutch is released, the loading of the lift spring means (22, 34, 46, 56) due to clutch disc (14) wear biases the ramp means apart to allow a gap to occur between the first and second ramp means which is dependent on clutch disc (14) wear, so that the adjuster spring means (18) can rotate the two ramp means relative to each other and thus increase the combined effective thickness of the ramp means to maintain the position and inclination angle of the diaphragm spring (13) substantially constant as the clutch disc (14) wears.

2. A clutch according to claim 1 in which the lift spring means (22, 34, 46, 56) surround the pin means (19, 30, 40, 50).

3. A clutch according to claim 1 or 2 in which the lift spring means (22) comprises Belleville springs (22) in series or parallel.

4. A clutch according to claim 1 or 2 in which the lift spring means (34, 46, 56) comprises coil springs (34, 46, 56).

5. A clutch according to any one of claims 1 to 4 in which the pin means (19) is provided as a rolled pin (19) which is squashed in its bore means (20) to provide the friction grip with the pressure plate (11).

6. A clutch according to any one of claims 1 to 4 in which the friction grip is provided by tapering cone shells (32) which surround the pin means (30) and are biased into contact with a conical portion (33) of the bore means (31) by the lift spring means (34).

7. A clutch according to any one of claims 1 to 4 in which the friction grip is provided by a self-gripping washer (42) whose inner periphery grips the pin means (40).

8. A clutch according to any one of claims 1 to 7 in which both abutment means are provided by circlips (44, 45) carried by the pin (40).

9. A clutch according to any one of claims 1 to 7 in which one abutment is provided by a circlip (55) carried by the pin means (50) and the other abutment is provided by a shoulder (54) formed on the pin (50).

10. A clutch according to any one of claims 1 to 7 in which the abutment at the other end of the pin (50) is provided by a head portion (62) formed on the pin (50) and the second abutment is provided by a shoulder (54) formed on the pin (50).

11. A clutch according to claim 10 in which the other end of the pin (50) has axially adjacent head (62), seating (61) and neck (60) portions, the pin (50) being connected with the hold down member (21) via a slot (63) in the hold down member (21) which opens into a seating hole (64), the slot (63) allowing the neck portion (60) of the pin (50) to pass therethrough into the seating hole (64) when the lift spring means (56) is compressed during assembly of the clutch so that the seating portion (61) of the pin (50) can sit in the seating hole (64) when the lift spring means (56) is released to hold the pin (50) in the hole (64).

12. A clutch according to any one of claims 1 to 11 provided with a plurality of wear sensors at circumferentially spaced location on the pressure plate (11).

13. A clutch according to any one of claims 1 to 12 in which the adjuster spring means (18) comprises coil springs (18) which act circumferentially between the two ramp means (16, 17).

## Patentansprüche

1. Reibungskupplung für ein Kraftfahrzeug, wobei die Kupplung umfasst eine Druckplatte (11), die gegen ein zugehöriges Schwungrad (12) durch eine Membranfeder (13) vorgespannt ist, eine Kupplungstriebscheibe (14) zum Einklemmen zwischen die Druckplatte (11) und das zugehörige Schwungrad (12) und einen Rampentyp-Verschleißnachsteller (15), der im Druckkraftweg zwischen der Membranfeder (13) und der Druckplatte (11) angeordnet ist, um Verschleiß der Triebscheibe (14) zu kompensieren, wobei der Verschleißnachsteller (15) eine erste Rampeneinrichtung (16) in nächster Nähe zu der Druckplatte (11) und eine zweite Rampeneinrichtung (17) in Kontakt mit der ersten Rampeneinrichtung aber weiter weg von der Druckplatte (11) und auch in Kontakt mit der Membranfeder (13) umfasst, wobei die erste und die zweite Rampeneinrichtung relativ zueinander um die Drehachse der Druckplatte (11) durch eine Nachstellfedereinrichtung (18) drehbar sind, um die zusammengesetzte wirksame Dicke der Rampeneinrichtungen zu erhöhen und dadurch den Stellweg der Membranfeder (13) im Wesentlichen konstant zu halten, während die Kupplungsscheibe (14) verschleißt, wobei der Verschleißnachsteller (15) auch einen Verschleißfühler in Form einer Stifteinrichtung (19, 30, 40, 50) enthält, die in einer Bohrungseinrichtung (20, 31, 41, 51) in der Druckplatte (11) gelagert ist und relativ zu der Druckplatte (11) durch einen Reibungsgriff gehalten wird, wobei ein Ende (19A, 30A) der Stifteinrichtung (19, 30, 40, 50) an dem Schwungrad (12) anliegt, wenn die Kupplung eingerückt ist, und das andere Ende (19B, 30B) der Stifteinrichtung (19, 30, 40, 50) ein erstes Widerlager (19C, 36) hat, das in Kontakt mit einem mit der zweiten Rampeneinrichtung verbundenen Niederhalteglied (21) ist, wobei die Reibungskupplung **durch** eine Hubfedereinrichtung (22, 34, 46, 56) **gekennzeichnet ist,** die auf einem zweiten Widerlager (19D, 37) auf der Stifteinrichtung (19, 30, 40, 50) abgestützt ist und dazu neigt, das Niederhalteglied (21) und somit die zweite Rampeneinrichtung weg von der ersten Rampeneinrichtung und gegen das erste Widerlager (19C, 36) vorzuspannen, somit wird, während die Kupplungsscheibe (14) verschleißt, die Stifteinrichtung (19, 30, 40, 50) durch die Bohrungseinrichtung (20, 31, 41, 51) gestoßen, um die Hubfedereinrichtung (22, 34, 46, 56) zu belasten, so dass, nachdem genügend Verschleiß aufgetreten ist, wenn die Kupplung ausgerückt wird, die Belastung der Hubfedereinrichtung (22, 34, 46, 56) infolge des Kupplungsscheiben (14)- Verschleißes die Rampeneinrichtungen auseinanderspannt, um einen Spalt zwischen der ersten und der zweiten Rampeneinrichtung auftreten zu lassen, der von dem Kupplungsscheiben (14)- Verschleiß abhängt, so dass die Nachstellfedereinrichtung (18) die zwei Rampeneinrichtungen relativ zueinander drehen und die zusammengesetzte wirksame Dicke der Rampeneinrichtungen erhöhen kann, um die Position und den Neigungswinkel der Membranfeder (13) im Wesentlichen konstant zu halten, während die Kupplungsscheibe (14) verschleißt.

2. Kupplung nach Anspruch 1, bei der die Hubfedereinrichtung (22, 34,46, 56) die Stifteinrichtung (19, 30, 40, 50) umgibt.

3. Kupplung nach Anspruch 1 oder 2, bei der die Hubfedereinrichtung (22) in Reihe oder parallel angeordnete Tellerfedern (22) aufweist.

4. Kupplung nach Anspruch 1 oder 2, bei der die Hubfedereinrichtung (34, 46, 56) Schraubenfedern (34, 46, 56) aufweist.

5. Kupplung nach einem der Ansprüche 1 bis 4, bei der die Stifteinrichtung (19) als Spannstift (19) bereitgestellt ist, der in seiner Bohrungseinrichtung (20) gequetscht ist, um den Reibungsgriff mit der Druckplatte (11) zu verschaffen.

6. Kupplung nach einem der Ansprüche 1 bis 4, bei der der Reibungsgriff durch sich verjüngende Kegelschalen (32) verschafft wird, die die Stifteinrichtung (30) umgeben und in Kontakt mit einem konischen Teil (33) der Bohrungseinrichtung (31) durch die Hubfedereinrichtung (34) vorgespannt werden.

7. Kupplung nach einem der Ansprüche 1 bis 4, bei der der Reibungsgriff durch eine selbstgreifende Beilagscheibe (42) verschafft wird, deren innerer Rand die Stifteinrichtung (40) ergreift.

8. Kupplung nach einem der Ansprüche 1 bis 7, bei der beide Widerlagereinrichtungen durch Sicherungsringe (44, 45) bereitgestellt werden, die von dem Stift (40) getragen werden.

9. Kupplung nach einem der Ansprüche 1 bis 7, bei der ein Widerlager durch einen von der Stifteinrichtung (50) getragenen Sicherungsring (55) bereitgestellt wird und das andere Widerlager durch einen an dem Stift (50) geformten Absatz (54) bereitgestellt wird.

10. Kupplung nach einem der Ansprüche 1 bis 7, bei der das Widerlager an dem anderen Ende des Stiftes (50) durch einen an dem Stift (50) geformten Kopfteil (62) bereitgestellt wird und das zweite Widerlager durch einen an dem Stift (50) geformten Absatz (54) bereitgestellt wird,

11. Kupplung nach Anspruch 10, bei der das andere Ende des Stiftes (50) axial benachbarte Kopf (62)-, Sitz (61)- und Hals (60)- Teile, wobei der Stift (50) mit dem Niederhalteglied (21) über einen Schlitz (63) in dem Niederhalteteil (21) verbunden ist, der sich in ein Sitzloch (64) öffnet, wobei der Schlitz (63) dem Halsteil (60) des Stiftes (50) gestattet, dort hindurch in das Sitzloch (64) hinein zu gehen, wenn die Hubfedereinrichtung (56) während des Zusammenbaus der Kupplung zusammengedrückt wird, so dass der Sitzteil (61) des Stiftes (50) in dem Sitzloch (64) sitzen kann, wenn die Hubfedereinrichtung (56) freigegeben wird, um den Stift (50) in dem Loch (64) zu halten.

12. Kupplung nach einem der Ansprüche 1 bis 11, die mit einer Vielzahl von Verschleißfühlern an in Umfangsrichtung beabstandeten Stellen an der Druckplatte (11) versehen ist.

13. Kupplung nach einem der Ansprüche 1 bis 12, bei der die Nachstellfedereinrichtung (18) Schraubenfedern (18) aufweist, die in Umfangsrichtung zwischen den zwei Rampeneinrichtungen (16, 17) wirken.

## Revendications

1. Embrayage à friction pour un véhicule à moteur, l'embrayage comprenant une plaque de pression (11) sollicitée vers un volant d'inertie (12) par un ressort à diaphragme (13), un disque d'entraînement d'embrayage (14) pour serrer entre la plaque de pression (11) et le volant d'inertie (12) associé, et un dispositif de rattrapage d'usure de type à rampe (15) positionné dans une trajectoire de poussée entre le ressort à diaphragme (13) et la plaque de pression (11) pour compenser l'usure du disque d'entraînement (14), le dispositif de rattrapage d'usure (15) comprenant un premier moyen de rampe (16) le plus proche de la plaque de pression (11) et un second moyen de rampe (17) en contact avec le premier moyen de rampe mais plus éloigné de la plaque de pression (11) et également en contact avec le ressort à diaphragme (13), les premier et second moyens de rampe pouvant relativement tourner autour de l'axe de rotation de la plaque de pression (11) par un moyen de ressort de dispositif de rattrapage (18) pour augmenter l'épaisseur effective combinée du moyen de rampe et par conséquent maintenir le déplacement du ressort à diaphragme (13) sensiblement constant au fur et à mesure que le disque d'embrayage (14) s'use, le dispositif de rattrapage d'usure (15) comprenant également un capteur d'usure se présentant sous la forme d'un moyen de broche (19, 30, 40, 50) porté dans le moyen d'alésage (20, 31, 41, 51) dans la plaque de pression (11) et maintenu par rapport à la plaque de pression (11) par une prise de friction, une extrémité (19A, 30A) du moyen de broche (19, 30, 40, 50) mettant en prise le volant d'inertie (12) lorsque l'embrayage est mis en prise et l'autre extrémité (19B, 30B) du moyen de broche (19, 30, 40, 50) ayant une première butée (19C, 36) qui est en contact avec un élément de retenue (21) raccordé avec le second moyen de rampe, l'embrayage à friction étant **caractérisé par** un moyen de ressort de levage (22, 34, 46, 56) supporté sur une seconde butée (19D, 37) sur le moyen de broche (19, 30, 40, 50) et ayant tendance à solliciter l'élément de retenue (21) et ainsi le second moyen de rampe à distance du premier moyen de rampe et vers la première butée (19C, 36), ainsi lorsque le disque d'embrayage (14) s'use, le moyen de broche (19, 30, 40, 50) est poussé à travers le moyen d'alésage (20, 31, 41, 51) pour charger le moyen de ressort de levage (22, 34, 46, 56) de sorte que, après que l'usure suffisante s'est produit, lorsque l'embrayage est libéré, le chargement du moyen de ressort de levage (22, 34, 46, 56) dû à l'usure du disque d'embrayage (14) écarte le moyen de rampe par sollicitation pour permettre l'occurrence d'un espace entre les premier et second moyens de rampe qui dépend de l'usure du disque d'embrayage (14), de sorte que le moyen de ressort de dispositif de rattrapage d'usure (18) peut faire tourner deux moyens de rampe l'un par rapport à l'autre et ainsi augmenter l'épaisseur effective combinée du moyen de rampe afin de maintenir l'angle de position et d'inclinaison du ressort à diaphragme (13) sensiblement constant lorsque le disque d'embrayage (14) s'use.

2. Embrayage selon la revendication 1, dans lequel le moyen de ressort de levage (22, 34, 46, 56) entoure le moyen de broche (19, 30, 40, 50).

3. Embrayage selon la revendication 1 ou 2, dans lequel le moyen de ressort de levage (22) comprend des rondelles Belleville (22) en série ou parallèles.

4. Embrayage selon la revendication 1 ou 2, dans lequel le moyen de ressort de levage (34, 46, 56) comprend des ressorts hélicoïdaux (34, 46, 56).

5. Embrayage selon l'une quelconque des revendications 1 à 4, dans lequel le moyen de broche (19) est prévu comme étant une broche roulée (19) qui est écrasée dans son moyen d'alésage (20) pour fournir la prise de friction avec la plaque de pression (11) .

6. Embrayage selon l'une quelconque des revendications 1 à 4, dans lequel la prise de friction est fournie par des coques coniques progressivement rétrécies (32) qui entourent le moyen de broche (30) et sont sollicitées en contact avec une partie conique (33) du moyen d'alésage (31) par le moyen de ressort de levage (34).

7. Embrayage selon l'une quelconque des revendications 1 à 4, dans lequel la prise de friction est fournie par une rondelle auto-agrippante (42) dont la périphérie interne saisit le moyen de broche (40).

8. Embrayage selon l'une quelconque des revendications 1 à 7, dans lequel deux moyens de butée sont fournis par des anneaux de retenue (44, 45) portés par la broche (40).

9. Embrayage selon l'une quelconque des revendications 1 à 7, dans lequel une butée est fournie par un anneau de retenue (55) porté par le moyen de broche (50) et l'autre butée est fournie par un épaulement (54) formé sur la broche (50).

10. Embrayage selon l'une quelconque des revendications 1 à 7, dans lequel la butée au niveau de l'autre extrémité de la broche (50) est fournie par une partie de tête (62) formée sur la broche (50) et la seconde butée est fournie par un épaulement (54) formé sur la broche (50).

11. Embrayage selon la revendication 10, dans lequel l'autre extrémité de la broche (50) a une tête (62) axialement adjacente, des parties de siège (61) et de col (60), la broche (50) étant raccordée avec l'élément de retenue (21) via une fente (63) dans l'élément de retenue (21) qui s'ouvre dans un trou de siège (64), la fente (63) permettant à la partie de col (60) de la broche (50) de passer à travers dans le trou de siège (64) lorsque le moyen de ressort de levage (56) est comprimé pendant l'assemblage de l'embrayage de sorte que la partie de siège (61) de la broche (50) peut s'assoir dans le trou de siège (64) lorsque le moyen de ressort de levage (56) est libéré pour retenir la broche (50) dans le trou (64).

12. Embrayage selon l'une quelconque des revendications 1 à 11 prévu avec une pluralité de capteurs d'usure à un emplacement circonférentiellement espacé sur la plaque de pression (11).

13. Embrayage selon l'une quelconque des revendications 1 à 12, dans lequel le moyen de ressort de dispositif de rattrapage (18) comprend des ressorts hélicoïdaux (18) qui agissent de manière circonférentielle entre les deux moyens de rampe (16, 17).
